Europäisches Patentamt

European Patent Office

Office européen des brevets

(19)

(11) Numéro de publication : **0 660 267 A1**

(12) **DEMANDE DE BREVET EUROPEEN**

(21) Numéro de dépôt : **94402906.5**

(22) Date de dépôt : **16.12.94**

(51) Int. Cl.⁶ : **G06T 7/00**

(30) Priorité : **21.12.93 FR 9315364**

(43) Date de publication de la demande :
**28.06.95 Bulletin 95/26**

(84) Etats contractants désignés :
**DE GB IT NL**

(71) Demandeur : **THOMSON-CSF**
**173, Boulevard Haussmann**
**F-75008 Paris (FR)**

(72) Inventeur : **Henocq, Hugues**
**Thomson-CSF,**
**SCPI,**
**B.P. 329**
**F-92402 Courbevoie Cedex (FR)**
Inventeur : **Burel, Gilles**
**Thomson-CSF,**
**SCPI,**
**B.P. 329**
**F-92402 Courbevoie Cedex (FR)**

(74) Mandataire : **Guérin, Michel et al**
**THOMSON-CSF**
**SCPI**
**B.P. 329**
**50, rue Jean-Pierre Timbaud**
**F-92402 Courbevoie Cédex (FR)**

(54) **Procédé de détermination de l'orientation d'objets tridimensionnels.**

(57)    Le procédé consiste à décrire (1) les coordonnées surfaciques de l'objet dans un espace à trois dimensions par une fonction $\psi(\theta,\phi)$ représentant dans chacune des directions $\psi$ et $\theta$ la distance entre l'origine et le point le plus éloigné de l'objet dans cette direction, à décomposer (2, 3) sous la forme de coefficients $c_{m,\ell}$ la fonction $\psi(\theta,\phi)$ dans la base des harmoniques sphériques et à normaliser (4) en rotation les coefficients $c_{m,\ell}$ de la décomposition pour obtenir une position de référence de l'objet assurant l'unicité des coefficients $c_{m,\ell}$.
    Applications : Identification d'objets.

FIG.4

EP 0 660 267 A1

La présente invention concerne un procédé de détermination de l'orientation d'objets tridimensionnels.

Elle s'applique aux domaines où le problème de la détermination de l'orientation d'objets à trois dimensions est particulièrement important lorsqu'il s'agit de les recaler relativement à un modèle, en vue soit de les comparer soit de les saisir. C'est le cas notamment, de la saisie de pièces industrielles, de l'identification d'objets dans une scène, de la reconnaissance en médical de molécules ou de l'évolution de données anatomiques par scanner ou IRM au cours du temps.

A la résolution de ce problème deux catégories de solutions sont généralement mises en oeuvre.

Une première catégorie consiste à rendre minimale et de manière itérative une fonction de comparaison prédéfinie. Une seconde catégorie part de l'hypothèse qu'un certain nombre d'appariements de zones caractéristiques entre l'objet le modèle sont déjà réalisés. Parmi les nombreuses variantes de solutions appartenant à ces deux catégories, il faut citer la thèse de I. Block intitulée "Reconnaissance de formes tridimensionnelles - Applications aux molécules chimiques" Télécom. Paris 90 E018, déc. 90 qui définit une fonction de distance à rendre minimale entre les faces, arêtes et sommets d'un polyèdre en réalisant une projection d'un modèle sur l'autre, le modèle à recaler étant préalablement orienté de façon grossière. Une autre solution est basée sur la représentation E.G.I (abréviation du vocable anglosaxon "extended gaussian image") ou complexe E.G.I de l'objet. Celle-ci est décrite dans l'article de S.B. Kang, Katsuski Ikeuchi ayant pour titre "Recognition of 3D objects using the Extended Gaussian Image" publiée dans Proc. of Int. Joint Conf. on Artificial Intelligence 595-600, 1981, ou encore dans l'article de Katsuski Ikeuchi ayant pour titre "Determining 3D Object Pose Using the complex Extended Gaussian Image" de Computer Vision and Pattern Recognition, 1991. Cette représentation, complète pour des objets convexes, permet de définir des contraintes simplificatrices pour la recherche de l'orientation. Parmi les variantes de solutions de la deuxième catégorie, l'article M.W. Alker, L. Shao and R.A. Volz ayant pour titre "Estimating 3D Location Parameters Using Dual Number Quaternions" CVGIP : Image Understanding Vol. 54 n°3 PP. 358-367, Nov. 91 et l'article de O.D. Faugeras and M. Hebert ayant pour titre "A 3D recognition and Positioning algorithm using geometrical matching between Primitive Surfaces" Proc. 8th Int. Joint Conf. on Artificial Intelligence, pp. 996-1002, August 83 utilisent l'expression de la rotation sous forme d'un quaternion ce qui permet de calculer la rotation en minimisant une fonction de coût assez simple. D'autres auteurs comme R.M. Haralick and H. Joo dans leur article "2D-3D Pose Estimation" 9th Int. Conf. on PAMI, Italy, Rome, pp. 385-391, 1988 ou S. Ullman and R. Basri dans leur article "Recognition by linear Combination of Models" IEEE Trans. on PAMI, vol. 13, n°10, pp. 992-1006, oct., utilisent la projection du modèle dans plusieurs images, des appariements 2D-3D permettent d'estimer la position de l'objet. Il n'existe en fait que très peu de méthodes de recalage direct, sans appariements ni minimisation de fonction. Z. Pingo, D. Cyganski and J.A. Orr dans leur article "Determination of 3D Objects Orientation form projections" paru dans Patter Recognition Letters 3, pp. 351-356, sept. 85 et Chong-Huah Lo, Hon-Son Don dans leur article "3D moment forms : their construction and application to object identification and positioning" paru dans IEEE-PAMI, vol. 2, n°2, march 1980 utilisent les moments 3D, extension des moments 2D connus de l'article M.K. Hu "Visual Pattern Recognition by moment invariants" IEEE Transactions on Information Theory, Vol. IT-8, pp. 179-187, Feb. 1962, définis dans l'article de Firooz, A. Sadjadi, Ernest L. Hall intitulé "Three-dimensional moment invariants" IEEE-PAMI, vol. 2, n°2, march 1980. La méthode parue dans l'article de Z. Pinjo, D. Cyganski and J.A. Orr "Détermination of 3D Objects orientation from projections" Pattern Recognition Letters 3, pp. 351-356, Sept. 85 détermine à l'aide d'équations linéaires reliant ces moments pour deux orientations la rotation relative aux deux positions et celle proposée par Chong-Huah Lo, Hon-Son Don dans l'article précédemment cité permettent d'obtenir les deux axes principaux de l'objet. La solution proposée par K.D. Toennies, J.K. Vodupa, G.T. Herman, I.L. Wormon III and S.R. Buchman dans leur article "Registration of 3D objects and surfaces" IEEE Computers Graphics and Applications, Vol. 10, n°3, pp. 52-62, May 90 permet le calcul de la rotation en prenant comme base de l'objet les vecteurs propres de la matrice de covariance des points de l'objet centré sur son centre de gravité.

Cependant aucun des procédés précités ne permet d'obtenir directement et sans calculs excessifs l'orientation d'un objet par rapport à une position de référence.

Le but de l'invention est de pallier l'inconvénient précité.

A cet effet l'invention a pour objet, un procédé de détermination de l'orientation d'objets tridimensionnels caractérisé en ce qu'il consiste à décrire les coordonnées surfaciques de l'objet dans un espace à trois dimensions par une fonction $\psi(\theta,\varphi)$ représentant dans chacune des directions $\varphi$ et $\theta$ la distance entre l'origine et le point le plus éloigné de l'objet dans cette direction, à décomposer sous la forme de coefficients $c_{m,\ell}$ la fonction $\psi(\theta,\varphi)$ dans la base des harmoniques sphériques et à normaliser en rotation les coefficients $c_{m,\ell}$ de la décomposition pour obtenir une position de référence de l'objet assurant l'unicité des coefficients $c_{m,\ell}$.

L'invention a pour principal avantage de pouvoir s'appliquer à la détermination de l'orientation d'objets quelconques, polyédriques ou non. Elle a aussi pour avantage de ne nécessiter aucun appariement entre modèles et par conséquent d'offrir un procédé de recalage extrêmement rapide par rapport aux procédés connus.

Les temps de calcul sont extrêmement courts, allant sur une machine SUN jusqu'à 1 seconde dans le cas d'un échantillonnage de la surface d'objet fait avec un pas de 5 degrés en θ et φ.

L'invention sera mieux comprise et d'autres caractéristiques apparaîtront à l'aide de la description qui suit en référence aux figures annexées qui représentent :

- La figure 1 un organigramme pour illustrer les différentes étapes du procédé selon l'invention.
- La figure 2 un système d'axe orthonormés à trois dimensions utilisé pour le repérage en coordonnées polaires d'objets.
- Les figures 3A et 3B, un objet réel (figure 3B) suivi de sa représentation vectorielle (figure 3A) selon l'invention.
- La figure 4 une illustration d'un recalage d'objets.

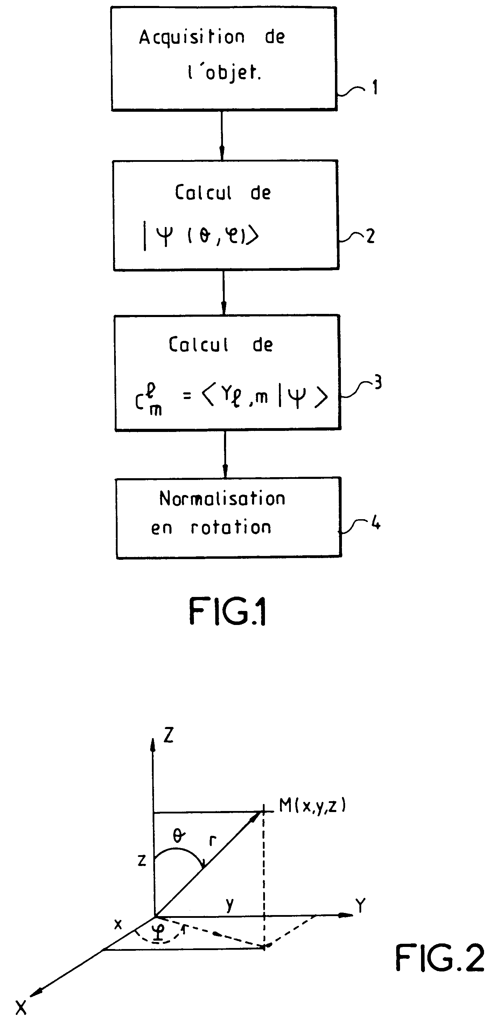

Selon l'organigramme de la figure 1, l'étape 1 du procédé consiste à acquérir une description dans l'espace à trois dimensions de la forme de l'objet, par reconstruction tomographique à partir de plusieurs vues provenant d'un capteur passif, caméra par exemple, ou à l'aide de capteurs actifs donnant une information de profondeur comme cela existe dans les installations radar, laser ou faisant usage d'ultrasons.

Pour effectuer cette reconstruction, les points de l'objet sont repérés dans un système de coordonnées rectangulaires (o, x, y, z) tel que celui représente à la figure 2. Dans ce système chaque point M de coordonnées x, y, z est défini en coordonnées polaires par les relations

$$x = r \sin \theta \cos \phi \quad (1)$$
$$y = r \sin \theta \sin \phi \quad (2)$$
$$z = r \cos \theta \quad (3)$$

où r désigne la distance du point M à l'origine o, θ l'angle

$$\left( \vec{oz}, \vec{Om} \right)$$

et φ l'angle formé par l'axe ox avec la direction projetée oM sur le plan o, x, y.

avec r≧o, o≦θ≦π et 0≦φ <2π

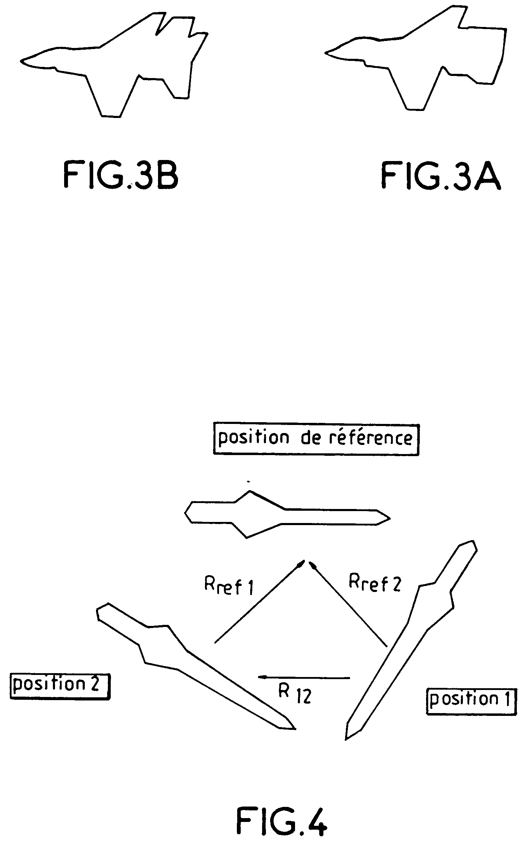

L'étape 2 suivante consiste à donner à l'objet une représentation surfacique en représentant l'objet par un vecteur $|\psi(\theta,\phi)>$ qui représente la distance par rapport à l'origine o du point le plus éloigné de l'objet dans chaque direction (θ,φ). Cette représentation est obtenue par échantillonnage régulier des angles θ et φ par pas distants d'un nombre déterminé de degrés. Ce processus permet comme le montre les figure 3A et 3B d'obtenir une surface extérieure englobante de l'objet suffisante pour déterminer son orientation.

L'étape 3 suivante consiste à effectuer une décomposition de l'objet sur une base orthonormée formée des vecteurs propres communs aux opérateurs carré du moment cinétique $L^2$ et projection du moment cinétique L sur l'axe z. Ces opérateurs dont une description peut notamment être trouvée dans les tomes 1 et 2 des livres de mécanique quantique de Messieurs Claude Cohen-Tanoudji, Bernard Dia et Franck Laloï publiées par l'édition Herman sont définis en coordonnées sphériques par la relation

$$L^2 = -\left( \frac{\partial^2}{\partial\theta^2} + \frac{1}{tg\theta} \frac{\partial}{\partial\theta} + \frac{1}{\sin^2\theta} \frac{\partial^2}{\partial\phi^2} \right) \quad (4)$$

qui désigne l'opérateur "carré du moment cinétique" et la relation

$$L_z = \frac{1}{i} \frac{\partial}{\partial\phi} \quad (5)$$

qui définit l'opérateur "moment cinétique" autour de l'axe z.

$L^2$ et $L_z$ sont des opérateurs hermitiens qui commutent.

Les vecteurs propres orthonormés associés à ces opérateurs sont encore appelés "Harmoniques sphériques" :

$$|y_{\ell m}\rangle.$$

ℓ est défini dans le corps des entiers naturels pour ℓ = 0, 1, 2... ∞ et m est défini dans le corps des entiers relatifs pour m = - ℓ, ..., ℓ-1, ℓ. Ces vecteurs sont calculés de manière récursive à l'aide d'équations de la forme

$$y_{\ell m}(\theta,\phi) = z_{\ell m}(\theta)\ell^{im\phi}$$

$z_{\ell m}$ étant un réel tel que

$$z_{\ell+1,m}(\theta) = \sqrt{\frac{(2\ell+1)(2\ell+3)}{(\ell+m+1)(\ell-m+1)}} \times$$

$$\left\{ \cos\theta z_{\ell m}(\theta) - \sqrt{\frac{(\ell+m)(\ell-m)}{(2\ell+1)(2\ell-1)}} \cdot z_{\ell-1,m}(\theta) \right\} \qquad (6)$$

La décomposition d'une forme représentée par un vecteur $|\psi\rangle$ dans la base

$$\left\{|y_{\ell m}\rangle\right\}$$

est obtenue en réalisant le produit scalaire du vecteur $|\psi\rangle$ avec les vecteurs de la base soit :

$$c_\ell^m = \langle y_{\ell m}|\psi\rangle = \int_0^{2\pi} d\phi \int_0^\pi \sin\theta d\theta y_{\ell m}^x(\theta,\phi)\psi(\theta,\phi) \qquad (7)$$

où $y_{\ell m}^x$ est le nombre conjugué de $y_{\ell m}$

La reconstruction de la forme $\psi$ à partir des coefficients $c_\ell^m$ s'obtient par la relation :

$$|\psi\rangle = \sum_{\ell,m} c_\ell^m |y_{\ell m}\rangle \qquad (8)$$

L'opérateur de rotation se met sous une forme très simple dans cette base.

En désignant par $L_x$, $L_y$ les opérateurs moment cinétique autour des axes ox et oy, l'opérateur de rotation R d'angle $\alpha$ autour d'un axe

$$\left[u_x, u_y, u_z\right]^T$$

qui transforme tout vecteur $|\psi\rangle$ en un vecteur $|\psi'\rangle$ par la relation

$$|\psi'\rangle = R|\psi\rangle \text{ tel que } \forall(x,y,z), \psi'(x',y',z') = \psi(x,y,z)$$

s'écrit en effet :

$$R = e^{-i\alpha(u_x L_x + u_y L_y + u_z L_z)} \qquad (9)$$

En posant :

$$L_+ = L_x + iL_y \qquad (10)$$
$$L_- = L_x - iL_y \qquad (11)$$
$$u_+ = \frac{u_x + iu_y}{2} \qquad (12)$$
$$u_- = \frac{u_x - iu_y}{2} \qquad (13)$$

Et en utilisant la formule connue du développement de Taylor l'expression de l'opérateur de rotation R dans la base

$$\left\{|y_{\ell n}\rangle\right\}$$

devient

$$R|y_{\ell m}\rangle = e^{-i\alpha(u_-L_+ + u_+L_- + u_zL_z)}|y_{\ell m}\rangle$$

$$= |y_{\ell m}\rangle - i\alpha(u_-L_+ + u_+L_- + u_z.L_z)|y_{\ell m}\rangle$$

$$- \frac{\alpha^2}{2!}(u_-L_+ + u_+L_- + u_zL_z)^2|y_{\ell m}\rangle$$

$$\ldots \qquad\qquad\qquad (14)$$

avec

$$L^2|y_{\ell m}\rangle = \ell(\ell+1)|y_{\ell m}\rangle$$

$$L_z|y_{\ell m}\rangle = m|y_{\ell m}\rangle$$

$$L_+|y_{\ell m}\rangle = \sqrt{\ell(\ell+1) - m(m+1)}\,|y_{\ell,m+1}\rangle$$

$$L_-|y_{\ell m}\rangle = \sqrt{\ell(\ell+1) - m(m-1)}\,|y_{\ell,m-1}\rangle$$

Ce qui précède montre que

$$R|y_{\ell m}\rangle$$

est formée d'une combinaison linéaire des harmoniques sphériques

$$\left\{|y_{\ell,-\ell}\rangle, |y_{\ell,-\ell+1}\rangle, \ldots |y_{\ell\ell}\rangle\right\}.$$

L'espace des vecteurs $\psi(\theta,\phi)$ est par suite décomposable en une somme directe de sous-espaces $\varepsilon_0$, $\varepsilon_1$, $\varepsilon_2$ ... etc orthogonaux globalement invariants par rotation. Dans ces sous-espaces,

$$\left\{|y_{00}\rangle\right\}$$

est une base de $\varepsilon_0$

$$\left\{|y_{1-1}\rangle, |y_{10}\rangle, |y_{11}\rangle\right\}$$

est une base de $\varepsilon_1$

$$\left\{|y_{2-2}\rangle, |y_{2-1}\rangle, |y_{20}\rangle, |y_{21}\rangle, |y_{22}\rangle\right\}$$

est une base de $\varepsilon_2$
etc. ...

Du fait que si un vecteur appartient au sous espace $\varepsilon_\ell$, son image par rotation appartient aussi à $\varepsilon_\ell$, l'opérateur de rotation peut aussi être mis sous la forme d'un produit matriciel transformant les coefficients $c_{m\ell}$ en coefficients $\bar{c}_{m\ell}$ tel que :

$$\left[\overline{C}_{m,\ell}\right] = \left[D\ \right]\left[C_{m,\ell}\right] \qquad (15)$$

Dans le mode de réalisation de l'invention qui est décrit ci-après la rotation est exprimée en utilisant les angles d'Euler. Elle consiste, à décomposer la rotation du repère (x,y,z) en 3 rotations élémentaires, une première rotation d'un angle $\alpha$ dans le plan (xoy) autour de l'axe z, qui amène y dans une direction u, suivie d'une rotation $\beta$ autour de u, qui amène z en Z, et enfin une rotation de $\gamma$ autour de Z. Celle-ci s'exprime par la relation

$$R(\alpha,\beta,\gamma) = e^{-i\gamma L_z}.e^{i\beta L_u}.e^{-i\alpha L_z} \qquad (16)$$

Si l'objet décrit par $\Psi$ subit une telle rotation, ces composantes $c_\ell^m$ deviennent :

$$c_\ell^m \rightarrow \sum_n D_{nm}^\ell(\alpha, \beta, \gamma) c_\ell^n \qquad (17)$$

avec

$$D_{nm}^\ell(\alpha,\beta,\gamma) = e^{-i\alpha n}.d_{nm}^\ell(\beta).e^{-i\gamma m} \qquad (18)$$

et

$$d_{nm}^\ell(\beta) = \sum_{t=0}^{\ell}(-1)^t \frac{\left[(\ell+n)!(\ell-n)!(\ell+m)!(\ell-m)!\right]^{1/2}}{(\ell+n-t)!(\ell-m-t)!(t+m-n)!t!}.\cos^{(2\ell+n-m-2t)}(\beta/2).\sin^{(2t+m-n)}(\beta/2) \qquad (19)$$

En utilisant les propriétés de symétries :

$$d_{nm}^\ell(\beta) = d_{nm}^{\ell*}(\beta) \Rightarrow d_{nm}^\ell(\beta) \text{ réel}$$
$$d_{nm}^\ell(\beta) = d_{-m-n}^\ell(\beta)$$
$$d_{nm}^\ell(\beta) = (-1)^{m-n}.d_{mn}^\ell(\beta)$$

Pour $\ell = 1$ et $\ell = 2$ les matrices $d_m^\ell(\beta)$ correspondantes s'écrivent :

$$d_{nm}^1(\beta) = \begin{pmatrix} \dfrac{(1+\cos\beta)}{2} & \dfrac{\sin\beta}{2} & \dfrac{(1-\cos\beta)}{2} \\ \dfrac{-\sin\beta}{2} & \cos\beta & \dfrac{\sin\beta}{2} \\ \dfrac{(1-\cos\beta)}{2} & \dfrac{-\sin\beta}{2} & \dfrac{(1+\cos\beta)}{2} \end{pmatrix} \qquad (20)$$

$$d_{nm}^2(\beta) =$$

$$\begin{pmatrix}
\left(\dfrac{1+\cos\beta}{2}\right)^2 & \dfrac{(1+\cos\beta)}{2}\sin\beta & \dfrac{\sqrt{6}}{4}\sin^2\beta & \dfrac{(1-\cos\beta)}{2}\sin\beta & \left(\dfrac{1-\cos\beta}{2}\right)^2 \\
-\dfrac{(1+\cos\beta)}{2}\sin\beta & \dfrac{(1+\cos\beta)}{2}(2\cos\beta-1) & \sqrt{\dfrac{3}{2}}\sin\beta\cos\beta & \dfrac{(1-\cos\beta)}{2}(2\cos\beta+1) & \dfrac{(1-\cos\beta)}{2}\sin\beta \\
\dfrac{\sqrt{6}}{4}\sin^2\beta & -\sqrt{\dfrac{3}{2}}\sin\beta\cos\beta & \dfrac{3}{2}\cos^2\beta-\dfrac{1}{2} & \sqrt{\dfrac{3}{2}}\sin\beta\cos\beta & \dfrac{\sqrt{6}}{4}\sin^2\beta \\
-\dfrac{(1-\cos\beta)}{2}\sin\beta & \dfrac{(1-\cos\beta)}{2}(2\cos\beta+1) & -\sqrt{\dfrac{3}{2}}\sin\beta\cos\beta & \dfrac{(1+\cos\beta)}{2}(2\cos\beta-1) & \dfrac{(1+\cos\beta)}{2}\sin\beta \\
\left(\dfrac{1-\cos\beta}{2}\right)^2 & -\dfrac{(1-\cos\beta)}{2}\sin\beta & \dfrac{\sqrt{6}}{4}\sin^2\beta & -\dfrac{(1+\cos\beta)}{2}\sin\beta & \left(\dfrac{1+\cos\beta}{2}\right)^2
\end{pmatrix} \qquad (21)$$

L'étape 4 du procédé consiste à effectuer une normalisation en rotation des coefficients $c_\ell^m$ pour déterminer l'orientation de l'objet, en considérant différemment les objets qui ne présentent pas de symétrie par rapport à l'origine, de ceux qui au contraire en présentent.

Pour les objets ne présentant pas de symétrie par rapport à l'origine l'information de rotation est entièrement contenue dans le sous-espace $\ell=1$. La rotation $R(\alpha,\beta,\gamma)$ de l'objet suivant les angles $\alpha$, $\beta$ et $\gamma$ définie par la relation (16) fournit des coefficients $c_\ell^m$ uniques et indépendants de l'orientation de l'objet. Ceux-ci sont définis conformément à la relation (17) en considérant séparément les rotations $\alpha$, $\beta$ et $\gamma$.

Dans la rotation d'angle $\alpha$ autour de l'axe z, les coefficients $c_\ell^m$ deviennent pour $\ell=1$ et $-1\leqq m\leqq 1$ des coefficients $c_\ell^m(\alpha)$ tels que ;

$$c_1^1(\alpha) = e^{-i\alpha}c_1^1 \qquad (22)$$

$$c_1^0(\alpha) = c_1^0 \quad (23)$$
$$c_1^{-1}(\alpha) = e^{-i\alpha}c_1^{-1} \quad (24)$$

En prenant pour $\alpha$, $\alpha_0 = $ - phase

$$\left(c_1^{-1}\right),$$

les parties imaginaires de $c_1^1(d_0)$ et $c_1^{-1}(d_0)$ sont annulées et les coefficients $c_1^m(\alpha_0)$ sont alors formés par des nombres réels.

Dans la rotation de l'angle $\beta$ autour de u les coefficients $c_1^m(\alpha)$ sont transformés en coefficients $c_1^m(\alpha,\beta)$ tels que :

$$c_1^1(\alpha,\beta) = \left(\frac{1-\cos\beta}{2}\right)c_1^{-1}(\alpha) + \frac{\sin\beta}{\sqrt{2}}c_1^0(\alpha) + \frac{(1+\cos\beta)}{2}c_1^1(\alpha) \quad (25)$$

$$c_1^0(\alpha,\beta,) = \frac{\sin\beta}{\sqrt{2}}c_1^{-1}(\alpha) + \cos\beta c_1^0(\alpha) - \frac{\sin\beta}{\sqrt{2}}c_1^1(\alpha) \quad (26)$$

$$c_1^{-1}(\alpha,\beta) = \frac{1+\cos\beta}{2}c_1^{-1}(\alpha) - \frac{\sin\beta}{\sqrt{2}}c_1^0(\alpha) + \frac{(1-\cos\beta)}{2}c_1^1(\alpha) \quad (27)$$

En considérant que pour un objet réel :

$$c_i^m = (-1)^m c_i^{-m} \quad (28)$$

et que pour $\alpha = \alpha_0$, $c_1^{-1}(\alpha_0)$ est réel et est égal à $-c_1^1(\alpha_0)$, les relations précédentes se simplifient et deviennent

$$c_1^1(\alpha_0,\beta) = \cos\beta c_1^1(\alpha_0) + \frac{\sin\beta}{\sqrt{2}}c_1^0(\alpha_0) \quad (29)$$

$$c_1^0(\alpha_0,\beta) = -\sqrt{2}\sin\beta c_1^1(\alpha_0) + \cos\beta c_1^0(\alpha_0) \quad (30)$$

En choisissant $\beta=\beta_0$ tel que $c_1^1(\alpha_0,\beta_0) = 0$, la relation (29) devient :

$$\cos\beta_0 c_1^1(\alpha_0) + \frac{\sin\beta_0}{\sqrt{2}}c_1^0(\alpha_0) = 0$$

$\beta_0$ est alors défini par :

$$\tan\beta_0 = -\sqrt{2}\frac{c_1^1(\alpha_0)}{c_1^0(\alpha_0)}$$

soit

$$\beta_0 = \arctan\left(-\sqrt{2}\frac{c_1^1(\alpha_0)}{c_1^0(\alpha_0)}\right) + \binom{\pi}{0} \quad (31)$$

Le choix pour $\beta_0$ est déterminé en remarquant que pour l'une et l'autre des deux solutions, $c_1^0(\alpha_0,\beta_0)$ change de signe. $\beta_0$ peut alors être choisi pour faire en sorte que par exemple $c_1^0(\alpha_0,\beta_0)$ soit positif.

Après avoir effectué les rotations $\alpha_0$, $\beta_0$ les coefficients $c_1^m(\alpha_0,\beta_0)$ sont tels que :

$$c_1^1(\alpha_0,\beta_0) = c_1^{-1}(\alpha_0,\beta_0) = 0$$
$$c_1^0(\alpha_0,\beta_0) > 0 \quad (32)$$

Dans la rotation $\gamma$ autour de l'axe z, et étant donné les contraintes imposées par la relation (32) sur $c_1^m(\alpha_0,\beta_0)$, une rotation de $\gamma$ des coefficients $c_1^m(\alpha_0,\beta_0)$, (équivalente à une rotation $\alpha$ sur $c_1^m$), n'a pas d'influence dans le sous-espace $\ell=1$. Dans le sous-espace $\ell=2$, les coefficients $c_2^m(\alpha,\beta)$ deviennent par la rotation $\gamma$, des coefficients $c_2^m(\alpha,\beta,\gamma)$ tels que :

$$c_2^1(\alpha,\beta,\gamma) = e^{-2i\gamma}c_2^1(\alpha,\beta)$$
$$c_2^1(\alpha,\beta,\gamma) = e^{-i\gamma}c_2^1(\alpha,\beta)$$
$$c_2^0(\alpha,\beta,\gamma) = c_2^0(\alpha,\beta)$$
$$c_2^{-1}(\alpha,\beta,\gamma) = e^{i\gamma}c_2^{-1}(\alpha,\beta) \quad (33)$$

7

$$c_2^{-2}(\alpha,\beta,\gamma) \;=\; e^{2j\gamma}c_2^{-2}(\alpha,\beta)$$

Ces relations permettent de définir un angle $\gamma = \gamma_0$ tel que, par convention, $c_2^{-1}(\alpha,\beta,\gamma)$ soit réel et positif et tel que :

$$\gamma_0 = -\text{phase}\!\left(c_2^{-1}(\alpha,\beta)\right) \quad (34)$$

Les angles $\alpha_0$, $\beta_0$ et $\gamma_0$ satisfont les contraintes définies par la relation (32) et la contrainte pour $c_2^{-1}(\alpha_0,\beta_0,\gamma_0)$ d'être réel et positif. Il n'est alors plus possible de trouver trois angles $\alpha$, $\beta$ et $\gamma$ différents de $\alpha_0$, $\beta_0$ et $\gamma_0$ respectivement satisfaisant également ces conditions. Les coefficients $c_\ell^m(\alpha_0,\beta_0,\gamma_0)$ sont indépendants de la rotation de départ, ils sont normalisés et forment les composantes de l'objet de départ dans une position de référence. Par la rotation $R_{ref} = R(\alpha_0,\beta_0,\gamma_0)$ l'objet s'oriente dans cette position de référence. Cette solution ne nécessite que la détermination des $c_\ell^m$ pour $1 \leq \ell \leq 2$ (L = 2).

Pour généraliser la normalisation aux objets symétriques, il faut envisager d'utiliser l'information de rotation implicitement contenue dans le sous-espace $\ell=2$. En réalisant des rotations successives $\alpha$, $\beta$ et $\gamma$ respectivement autour des axes z, u et Z, les coefficients $c_\ell^m$ sont amenés dans une position unique indépendante de l'orientation de départ. Cette position est définie de la façon suivante :

Du fait de la relation (28), le comportement des coefficients $c_\ell^m$ n'est envisagé que pour $m \leq 0$.

Dans les rotations d'angle $\alpha$ et $\beta$ il est recherché dans un premier temps à satisfaire la relation $\alpha = \alpha_0$ et $\beta = \beta_0$, $c_2^{-1}(\alpha_0,\beta_0) = 0$. La rotation d'angle $\beta_0$ doit simultanément annuler la partie imaginaire et la partie réelle de $c_2^{-1}(\alpha_0,\beta_0)$.

De par les relations (21) et (28) et en posant :

$c_2^0(\alpha) = a_0$

$c_2^{-1}(\alpha) = -a_1 + jb_1$

$c_2^{-2}(\alpha) = a_2 - jb_2$,

une rotation $\beta$, transforme les coefficients $c_2^m(\alpha)$ en coefficients $c_2^m(\alpha,\beta)$ tels que :

$$c_2^0(\alpha,\beta) \;=\; \frac{\sqrt{6}}{2}\sin^2\!\beta\, a_2 + \sqrt{6}\,\sin\beta\cos\beta\, a_1 + \left(\frac{3}{2}\cos^2\beta - \frac{1}{2}\right)a_0$$

$$c_2^{-1}(\alpha,\beta) \;=\; \left(\frac{a_2}{2} - \frac{1}{2}\sqrt{\frac{3}{2}}\,a_0\right)\sin(2\beta) - a_1\cos(2\beta) + j(b_1\cos\beta - b_2\sin\beta) \qquad (35)$$

$$c_2^{-2}(\alpha,\beta) \;=\; \frac{a_2}{2}\left(1 + \cos^2\beta\right) + a_1\sin\beta\cos\beta - \sqrt{\frac{3}{2}}\,\sin\beta\cos\beta\, a_0 - j(b_1\sin\beta + b_2\cos\beta)$$

Pour annuler à la fois la partie réelle et la partie imaginaire de $c_2^{-1}(\alpha,\beta)$ pour $\beta = \beta_0$, il faut, en posant

$$A = \left(\frac{a_2}{2} - \frac{1}{2}\sqrt{\frac{3}{2}}\,a_0\right)$$

que

A $\sin(2\beta_0) - a_1\cos(2\beta) = 0$ et $b_1\cos\beta_0 - b_2\sin\beta_0 = 0$ soit encore que :

$$\tan(2\beta_0) \;=\; \frac{a_1}{A} \text{ ce qui implique}$$

$$\frac{2\tan\beta_0}{1 - \tan^2\beta_0} \;=\; \frac{a_1}{A} \quad (36)$$

$$\tan(\beta_0) \;=\; \frac{b_1}{b_2} \quad (37)$$

En remplaçant (37) dans (36), et en supposant que

$$\left(a_2 - \sqrt{\frac{3}{2}}\,a_0\right) \neq 0 \quad \text{ et } \quad \left(b_2^2 - b_1^2\right) \neq 0,$$

il vient :

$$a_1\left(b_2^2 - b_1^2\right) - b_1 b_2\left(a_2 - \sqrt{\frac{3}{2}}a_0\right) = 0 \qquad (38)$$

Pour qu'un angle $\beta_0$ annule simultanément les parties réelle et imaginaire de $c_2^{-1}(\alpha,\beta)$, il faut selon (37) que

$$\beta_0 = \arctan\left(\frac{b_1}{b_2}\right) = \frac{1}{2}\arctan\left(\frac{a_1}{A}\right).$$

L'angle $\alpha = \alpha_0$ est déterminé en fonction des équations (37) et (38).
En posant :

$c_2^0 = w_0$

$c_2^{-1} = -w_1 + jp_1$

$c_2^{-2} = w_2 - jp_2$

les coefficients $c_2^m$ deviennent par $\alpha$, $c_2^m(\alpha)$ tels que :

$c_2^0(\alpha) = w_0$

$c_2^{-1}(\alpha) = (-w_1 + jp_1)(\cos\alpha + j\sin\alpha)$

$c_2^{-2}(\alpha) = (w_2 - jp_2)(\cos(2\alpha) + j\sin(2\alpha))$

d'où

$a_0 = w_0$

$a_1 = w_1\cos\alpha + p_1\sin\alpha \qquad b_1 = p_1\cos\alpha - w_1\sin\alpha$

$a_2 = w_2\cos(2\alpha) + p_2\sin(2\alpha) \qquad b_2 = p_2\cos(2\alpha) - w_2\sin(2\alpha)$

Dans ces conditions, en définissant :

$$\Im(\alpha) = a_1\left(b_2^2 - b_1^2\right) - b_1 b_2\left(a_2 - \sqrt{\frac{3}{2}}a_0\right),$$

il suffit de prendre pour $\alpha_0$, un angle satisfaisant $\Im(\alpha) = 0$. Une méthode de recherche de zéros telle que la méthode de Newton, par exemple, permet de trouver rapidement par 4 à 5 itérations, une valeur précise de $\alpha_0$ annulant $\Im$.

Ensuite, par une rotation d'angle $\gamma = \gamma_0$ le coefficient $c_2^{-2}(\alpha_0,\beta_0,\gamma_0)$ est imposé à une valeur réelle (phase nulle) et positive avec $c_2^{-1}(\alpha_0,\beta_0,\gamma_0) = 0$ quel que soit $\gamma_0$. $\gamma_0$ est alors déterminé tel que :

$$\gamma_0 = -\frac{1}{2}\text{phase}\left(c_2^{-2}(\alpha_0,\beta_0)\right)$$

De la sorte, en réalisant une rotation d'angles $(\alpha_0,\beta_0,\gamma_0)$ les coefficients $c_2^m(\alpha_0,\beta_0,\gamma_0)$ vont respecter dans l'espace $\ell = 2$ les relations :

$c_2^{-1}(\alpha_0,\beta_0,\gamma_0) = 0$

et

$c_2^{-2}(\alpha_0,\beta_0,\gamma_0)$ réel et positif $\qquad$ (39)

Les rotations d'angles $(\alpha_0,\beta_0,\gamma_0)$ des coefficients $c_\ell^m$ amène les $c_\ell^m(\alpha_0,\beta_0,\gamma_0)$ dans une position telle qu'ils respectent les conditions (38) précédentes. Cependant ces conditions ne suffisent pas pour les rendre uniques. Il existe en effet plusieurs positions particulières satisfaisantes et il suffit de n'en trouver assurément qu'une parmi elles. Pour cela, il faut rechercher quelles sont les rotations résiduelles possibles. Afin d'alléger les calculs, on désigne par $b_\ell^m$ les coefficients de décomposition de l'objet ayant subi la rotation $R(\alpha_0,\beta_0,\gamma_0)$ tels que :

$b_\ell^m = c_\ell^m(\alpha_0, \beta_0, \gamma_0)$

Il est impossible d'effectuer une première rotation $\alpha \neq 0$ des $b_\ell^m$ en respectant $b_2^{-2} = c_2^{-2}(\alpha_0, \beta_0, \gamma_0)$ réel. Par contre, il n'en n'est pas de même pour $\beta$, car dans ce cas les coefficients $b_2^m$ deviennent $b_2^m(\beta)$ tels que :

en posant :

$b_2^0 = x_0$

$$\left(b_2^{-1} = 0\right)$$

$b_2^{-2} = x_2$

les coefficients $b_2^m(\beta)$ deviennent

$$b_2^0(\beta) = \left(\frac{3}{2}\cos^2\beta - \frac{1}{2}\right).x_0 + \frac{\sqrt{6}}{2}\sin^2\beta.x_2$$

$$b_2^{-1}(\beta) = \left(\frac{x_2}{2} - \frac{1}{2}\sqrt{\frac{3}{2}}.x_0\right)\sin(2\beta) \qquad (40)$$

$$b_2^{-2}(\beta) = \frac{x_2}{2}\left(1 + \cos^2\beta\right) + \frac{\sqrt{6}}{4}\sin^2\beta.x_0$$

Toutes les valeurs de $\beta$ tel que $\sin(2\beta) = 0$ satisfont les contraintes (38), soit pour $0 \leqq \beta < 2\pi$, $\beta = 0, \frac{\pi}{2}, \pi$ ou $3\frac{\pi}{2}$.

1. Pour $\beta = 0$ ou $\pi$ : $b_2^0(\beta) = x_0$ et $b_2^{-2}(\beta) = x_2$

2. Pour $\beta = \frac{\pi}{2}$ ou $3\frac{\pi}{2}$ $b_2^0(\beta) = \frac{\sqrt{6}}{2}.x_2 - \frac{x_0}{2}$ $b_2^{-2}(\beta) = \frac{x_2}{2} + \frac{\sqrt{6}}{4}.x_0$

On peut dans un premier temps, faire un choix entre la première et la deuxième solution en prenant par convention le cas donnant la plus petite valeur de $b_2^{-2}(\beta)$. Ensuite, afin de choisir entre 0 et $\pi$ ou entre $\frac{\pi}{2}$ et $3\frac{\pi}{2}$, on montre que le passage d'un angle à l'autre dans les 2 cas provoque le changement de signe de la phase de $b_4^{-4}(\beta)(\ell = 4)$ (cf. annexe 3). Imposer, par exemple, que la phase de $b_4^{-4}(\beta)$ soit comprise entre 0 et $\pi$ permet de déterminer sans ambiguité un angle $\beta = \beta_1$ unique.

Si l'objet n'est pas symétrique par rapport à l'origine alors il est également possible d'orienter ce dernier choix en contrôlant le signe $b_1^0(\beta)$. En effet, celui-ci change de signe lorsque $\beta$ passe de 0 à $\pi$ ou de $\frac{\pi}{2}$ à $3\frac{\pi}{2}$.

Si l'on effectue ensuite une rotation $\gamma$, les coefficients $b_\ell^m(\beta_1)$ deviennent des coefficients $b_\ell^m(\beta_{1,\gamma})$ tels que :

pour $\ell = 1$ :

$b_1^0(\beta_{1,\gamma}) = b_1^0(\beta_1)$

$b_1^{-1}(\beta_{1,\gamma}) = b_1^{-1}(\beta_1).e^{i\gamma}$

pour $\ell = 2$ :

$b_2^0(\beta_{1,\gamma}) = b_2^0(\beta_1)$

$b_2^{-1}(\beta_{1,\gamma}) = 0$

$b_2^{-2}(\beta_{1,\gamma}) = b_2^{-2}(\beta_1).e^{i2\gamma} = k2.e^{i2\gamma}$

pour $\ell = 4$ :

$b_4^{-3}(\beta_{1,\gamma}) = b_4^{-3}(\beta_1).e^{i3\gamma}$

$b_4^{-4}(\beta_{1,\gamma}) = b_4^{-4}(\beta_1).e^{i4\gamma}$

Pour $\gamma = 0, \frac{\pi}{2}, \pi$ ou $3\frac{\pi}{2}$ $(0 \leqq \gamma < 2\pi)$ les conditions précédemment établies sont maintenues. Afin de garantir une solution unique, $\gamma = \gamma_1$ est pris tel que :

$$\begin{cases} b_2^{-2}(\beta_1, \gamma_1) \text{ réel et positif} \\ 0 \leq \text{phase}\left(C_4^{-3}(\beta_1, \gamma_1)\right) < \pi \text{ ou } 0 \leq \text{phase}\left(C_1^{-1}(\beta_1, \gamma_1)\right) < \pi \end{cases} \tag{41}$$

En effet, si $b_2^{-2}(\beta_1)$ réel et positif, $\gamma_1 = 0$ ou $\pi$ sinon $\gamma_1 = \frac{\pi}{2}$ ou $3\frac{\pi}{2}$. Le choix entre 0 et $\pi$ ou $\frac{\pi}{2}$ et $3\frac{\pi}{2}$ provoque un changement de signe de la phase $C_4^{-3}(\beta_1, \gamma_1)$ et de la phase de $C_1^{-1}(\beta_1, \gamma_1)$. Selon la nature de l'objet, symétrique ou non par rapport à l'origine, on pourra imposer l'une ou l'autre des conditions définies par la relation (40).

Par deux rotations successives, $R(\alpha_0, \beta_0, \gamma_0)$ et $R(0, \beta_1, \gamma_1)$ les coefficients $b_\ell^m(\beta_1, \gamma_1)$ sont tels qu'ils respectent les conditions résumées ci-dessous :

$$\begin{cases} b_2^{-1}(\beta_1, \gamma_1) = 0 \\ b_2^{-2}(\beta_1, \gamma_1) \text{ réel, positif et minimum} \\ 0 \leq \text{phase}\left(b_4^{-4}(\beta_1, \gamma_1)\right) < \pi \text{ ou } b_1^0(\beta_1, \gamma_1) > 0 \\ 0 \leq \text{phase}\left(b_4^{-3}(\beta_1, \gamma_1)\right) < \pi \text{ ou } 0 \leq \text{phase}\left(b_1^{-1}(\beta_1, \gamma_1)\right) < \pi \end{cases} \tag{42}$$

Comme il n'est plus possible de trouver à nouveau 3 angles de rotation $(\alpha, \beta, \gamma)$ non tous nuls maintenant les conditions (42), les coefficients $b_\ell^m(\beta_1, \gamma_1)$ sont ainsi normalisés en rotation, ils représentent les coefficients de décomposition de l'objet de départ après une rotation $R_{ref}$ qui l'oriente dans une position de référence telle que :

$R_{ref} = R(0, \beta_1, \gamma_1) . R(\alpha_0, \beta_0, \gamma_0)$

Cette seconde solution ne nécessite que la détermination des composantes $c_\ell^m$ pour $1 \leq \ell \leq 4$ (L = 4).

Par le biais du procédé de normalisation précédemment décrit, le recalage en rotation d'un objet par rapport à un autre peut être facilement calculé par rapport à leur position de référence. Comme le montre la figure 4 qui illustre le cas d'un recalage de missiles, le recalage $R_{12}$ d'un objet occupant une position 2 par rapport à un objet occupant une position 1 est obtenu par le produit

$R_{12} = R_{ref1}^{-1} . R_{ref2}$

dans lequel $R_{ref1}$ et $R_{ref2}$ désignent respectivement les rotations amenant les objets de leur position 1 et 2 dans leur position de référence. Par suite, si l'on considère que la position de référence est celle qui est occupée par un modèle, le même processus permet d'obtenir facilement l'orientation d'un objet quelconque par rapport à ce modèle.

## ANNEXES

<u>Annexe 1</u> : Calcul des harmoniques sphériques.

Les harmoniques sphériques peuvent être calculées à l'aide des équations récurrentes.

$$Y_{\ell m}(\theta,\phi) = Z_{\ell m}(\theta)e^{im\phi} \quad \text{où } Z_{\ell m}(\theta) \text{ est réel}$$

$$Z_{\ell+1,m}(\theta) = \sqrt{\frac{(2\ell+1)(2\ell+3)}{(\ell+m+1)(\ell-m+1)}}\left\{\cos\theta Z_{\ell m}(\theta) - \sqrt{\frac{(\ell+m)(\ell-m)}{(2\ell+1)(2\ell-1)}}Z_{\ell-1,m}(\theta)\right\}$$

$$Z_{\ell\ell}(\theta) = d_\ell(\sin\theta)^\ell \text{ avec } d_\ell = \frac{(-1)^\ell}{2^\ell \ell!}\sqrt{\frac{(2\ell+1)!}{4\pi}}$$

$$Z_{\ell-m}(\theta) = (-1)^m Z_{\ell m}(\theta)$$

Ils ont les propriétés ci-dessous :

$$S1: \left[Y_{\ell m}(\theta,\phi)\right]^* = (-1)^m Y_{\ell,-m}(\theta,\phi)$$

$$S2: Y_{\ell m}(\pi-\theta,\pi+\phi) = (-1)^\ell Y_{\ell m}(\theta,\phi)$$

<u>Annexe 2</u> : Résultats concernant les $c_\ell^m$

P1 :

$$\left(c_\ell^m\right)^* = \left\langle Y_{\ell m}|\Psi\right\rangle^*$$

$$= \left\langle \left(Y_{\ell m}\right)^*\middle|\Psi^*\right\rangle$$

$$= \left\langle (-1)^m Y_{\ell,-m}\middle|\Psi\right\rangle$$

$$\text{car } \Psi^* = \Psi \text{ et } \left(Y_{\ell m}\right)^* = (-1)^m Y_{\ell m}$$

$$= (-1)^m c_\ell^{-m}$$

P2 :

$$\left(c_\ell^m\right)^* = \left[\int_{\phi=-\pi}^{\pi} d\phi \int_{\theta=0}^{\pi} \sin\theta d\theta \Psi(\theta,\phi) Y_{\ell m}^*(\theta,\phi)\right]^*$$

$$= \int_{\phi=-\pi}^{\pi} d\phi \int_{\theta=0}^{\pi} \sin\theta d\theta \Psi(\theta,\phi) Y_{\ell m}(\theta,\phi)$$

$$= -\int_{\phi'=\pi}^{-\pi} d\phi' \int_{\theta=0}^{\pi} \sin\theta d\theta \Psi(\theta,-\phi') Y_{\ell m}(\theta,-\phi')$$

$$= -\int_{\phi'=\pi}^{-\pi} d\phi' \int_{\theta=0}^{\pi} \sin\theta d\theta \Psi(\theta,-\phi') Y_{\ell m}^*(\theta,\phi')$$

$$= \int_{\phi=-\pi}^{\pi} d\phi \int_{\theta=0}^{\pi} \sin\theta d\theta \Psi(\theta,-\phi) Y_{\ell m}^*(\theta,\phi)$$

Si l'objet a un plan de symétries, alors il existe une position pour laquelle $\Psi(\theta,-\phi) = \Psi(\theta,\phi)$, alors dans cette position $c_\ell^m = \left(c_\ell^m\right)^*$.

P3 : Si deux objets ont une symétrie miroir, alors $\Psi'(\theta,-\phi) = \Psi(\theta,\phi)$.

D'où en utilisant l'expression de $\left(c_\ell^m\right)^*$ dérivée de la démonstration P2, nous avons $\left(c_\ell^m\right)' = \left(c_\ell^m\right)^*$.

P4 : Si l'objet est symétrique par rapport à l'origine, alors :
$$\Psi(\pi - \theta, \pi + \phi) = \Psi(\theta,\phi)$$

et sachant que :
$$Y_{\ell m}(\pi - \theta, \pi + \phi) = (-1)^\ell Y_{\ell m}(\theta,\phi)$$

Nous déduisons,

$$c_\ell^m = \int_0^\pi d\phi \int_0^\pi \sin\theta d\theta Y_{\ell m}^*(\theta,\phi)\Psi(\theta,\phi) + \int_{-\pi}^0 d\phi \int_0^\pi \sin\theta d\theta Y_{\ell m}^*(\theta,\phi)\Psi(\theta,\phi)$$

$$= \int_0^\pi d\phi \int_0^\pi \sin\theta d\theta Y_{\ell m}^*(\theta,\phi)\Psi(\theta,\phi)$$

$$+ \int_{-2\pi}^{-\pi} d(\phi'+\pi)\int_\pi^0 \sin(\pi-\theta')d(\pi-\theta')Y_{\ell m}^*(\pi-\theta',\pi+\phi')\Psi(\pi-\theta',\pi+\phi')$$

$$\text{où } \phi' = \phi - \pi \text{ et } \theta' = \pi - \theta$$

$$= \int_0^\pi d\phi \int_0^\pi \left[ \sin\theta d\theta Y_{\ell m}^*(\theta,\phi)\Psi(\theta,\phi) + \sin\theta d\theta(-1)^\ell Y_{\ell m}^*(\theta,\phi)\Psi(\theta,\phi) \right]$$

$$= 0 \text{ si } \ell \text{ est impair}$$

<u>Annexe 3</u> : Rotation d'angles $\beta = 0, \pi, \dfrac{\pi}{2}$ et $3\dfrac{\pi}{2}$ dans $1 = 4$ pour $b_4^{-4}(\beta)$

On a :

$$b_4^{-4}(\beta) = \sum_{n=-4}^4 d_{n,-4}^4(\beta).b_4^n$$

On pose :

$$b_4^0 = a_0$$

$$b_4^{-1} = -a_1 + jb_1 \quad b_4^{-2} = a_2 - jb_2 \quad b_4^{-3} = -a_3 + jb_3 \quad b_4^{-4} = a_4 - jb_4$$

$$b_4^1 = a_1 + jb_1 \quad b_4^2 = a_2 + jb_2 \quad b_4^3 = a_3 + jb_3 \quad b_4^4 = a_4 + jb_4$$

On relève ci-dessous les 9 valeurs de $d_{n,-4}^4(\beta)(-4 \le n \le 4)$ pour $\beta = 0$ et $\pi$ :

$$d_{n,-4}^4(0) = \{1,0,0,0,0,0,0,0,0\}$$

$$d_{n,-4}^4(\pi) = \{0,0,0,0,0,0,0,0,1\}$$

et pour $\beta = \dfrac{\pi}{2}$ et $3\dfrac{\pi}{2}$ :

$$d_{n,-4}^4\left(\dfrac{\pi}{2}\right) = \{0.0625, -0.177, 0.331, -0.468, 0.523, -0.468, 0.331, -0.177, 0.0625\}$$

$$d_{n,-4}^4\left(3\dfrac{\pi}{2}\right) = \{0.0625, 0.177, 0.331, 0.468, 0.523, 0.468, 0.331, 0.177, 0.0625\}$$

soit

$$d_{n,-4}^{4}\left(\frac{\pi}{2}\right) = \left\{k_0, k_1, k_2, k_3, k_4, k_3, k_2, k_1, k_0\right\}$$

$$d_{n,-4}^{4}\left(3\frac{\pi}{2}\right) = \left\{k_0, -k_1, k_2, -k_3, k_4, -k_3, k_2, -k_1, k_0\right\}$$

d'où

$$b_4^{-4}(0) = a_4 - jb_4$$

$$b_4^{-4}(\pi) = a_4 + jb_4$$

La phase de $b_4^{-4}(\beta)$ change de signe entre $\beta = 0$ et $\beta = \pi$.

$$b_4^{-4}\left(\frac{\pi}{2}\right) = 2(k_4.a_4 + k_2.a2) + k_0.a_0 + 2j(k_3.b_3 + k_1.b_1)$$

$$b_4^{-4}\left(3\frac{\pi}{2}\right) = 2(k_4.a_4 + k_2.a2) + k_0.a_0 - 2j(k_3.b_3 + k_1.b_1)$$

La phase de $b_4^{-4}(\beta)$ change également de signe entre $\beta = \frac{\pi}{2}$ et $\beta = 3\frac{\pi}{2}$.

**Revendications**

1. Procédé de détermination de l'orientation d'objets tridimensionnels caractérisé en ce qu'il consiste à décrire (1) les coordonnées surfaciques de l'objet dans un espace à trois dimensions par une fonction $\psi(\theta,\varphi)$ représentant dans chacune des directions $\varphi$ et $\theta$ la distance entre l'origine et le point le plus éloigné de l'objet dans cette direction, à décomposer (2, 3) sous la forme de coefficients $c_{m,\ell}$ la fonction $\psi(\theta,\varphi)$ dans la base des harmoniques sphériques et à normaliser (4) en rotation les coefficients $c_{m,\ell}$ de la décomposition pour obtenir une position de référence de l'objet assurant l'unicité des coefficients $c_{m,\ell}$.

2. Procédé selon la revendication 1 caractérisé en ce que la position de référence de l'objet est déterminée par rotations d'angles d'Euler dans un trièdre de référence (o, x, y, $\beta$).

3. Procédé selon la revendication 2 caractérisé en ce qu'il consiste à calculer pour les objets ne présentant pas de symétrie par rapport à l'origine du trièdre de référence les coefficients $c_{m,\ell}$ de la décomposition et à normaliser ces coefficients dans le sous-espace $\ell=1$ des harmoniques sphériques pour obtenir une position de référence de l'objet définie par les angles d'Euler $\alpha_0,\beta_0$ telle que les coefficients $c_1^1(\alpha_0,\beta_0) = c_1^{-1}(\alpha_0,\beta_0) = 0$ et que le coefficient $c_1^0(\alpha_0,\beta_0)$ soit réel et positif et par l'angle d'Euler $\gamma_0 = -$ phase $\left(c_2^{-2}(\alpha_0,\beta_0)\right)$.

4. Procédé selon la revendication 2 caractérisé en ce qu'il consiste à calculer pour les objets présentant une symétrie par rapport à l'origine du trièdre de référence les coefficients $c_{m,\ell}$ de la décomposition et à normaliser ces coefficients dans le sous-espace $\ell=2$ des harmoniques sphériques pour obtenir une position de référence de l'objet définie par les angles d'Euler telle que le coefficient $c_2^{-2}(\alpha_0,\beta_0,\gamma_0)$ soit réel et positif et que le coefficient $c_2^{-1}(\alpha_0,\beta_0,\gamma_0)$ soit nul quelque soit $\gamma_0$.

5. Procédé selon la revendication 4 caractérisé en ce qu'il consiste à normaliser les coefficients $c_{m,\ell}$ en faisant suivre $R(\alpha_0,\beta_0,\gamma_0)$ d'une rotation $R(0,\beta_1,\gamma_1)$ de sorte que les coefficients obtenus $b_\ell^m(\beta_1,\gamma_1)$ soient tels que $b_2^{-1}(\beta_1,\gamma_1) = 0$ et $b_2^{-2}(\beta_1,\gamma_1)$ soit réel, positif et minimum et tels que $0 \leqq$ phase

$$\left(b_4^{-4}(\beta_1, \gamma_1)\right)$$

$< \pi$ ou ou $b_1^0(\beta_1, \gamma_1) > 0$ et $0 \leqq$ phase

$$\left(b_4^{-3}(\beta_1, \gamma_1)\right)$$

$< \pi$ ou $0 \leqq$ phase

$$\left(b_1^{-1}(\beta_1, \gamma_1)\right)$$

$< \pi$, ce qui assure l'unicité des coefficients.

Acquisition de
l'objet.

1

Calcul de
$|\Psi(\theta,\varphi)\rangle$

2

Calcul de
$c_m^\ell = \langle Y_{\ell,m} | \Psi \rangle$

3

Normalisation
en rotation

4

# FIG.1

# FIG.2

# FIG.3B

# FIG.3A

position de référence

$R_{ref\,1}$

$R_{ref\,2}$

position 2

$R_{12}$

position 1

# FIG.4

18

**Office européen des brevets**

# RAPPORT DE RECHERCHE EUROPEENNE

Numero de la demande

EP 94 40 2906

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | SOUTHCON/82 CONFERENCE RECORD, ORLANDO, FL, USA, 23-25 MARCH 1982, 1982, EL SEGUNDO, CA, USA, ELECTRON. CONVENTIONS, USA, PAGE(S) 4 - 1/1-4 Mitchell O R et al 'A shape extraction and recognition system' * page 1, colonne de gauche, ligne 15 - ligne 19 * * page 2, colonne de droite, ligne 45 - ligne 59 * | 1-5 | G06T7/00 |
| X | PROCEEDINGS CVPR '88: THE COMPUTER SOCIETY CONFERENCE ON COMPUTER VISION AND PATTERN RECOGNITION (CAT. NO.88CH2605-4), ANN ARBOR, MI, USA, 5-9 JUNE 1988, ISBN 0-8186-0862-5, 1988, WASHINGTON, DC, USA, IEEE COMPUT. SOC. PRESS, USA, PAGE(S) 286 - 290 Lin C -S 'Invariants of three-dimensional contours' * page 287, colonne de droite, ligne 36 - ligne 44; figures 2,3 * | 1-5 | |
| A | JOURNAL OF BIOMEDICAL ENGINEERING, MARCH 1990, UK, VOL. 12, NR. 2, PAGE(S) 143 - 149, ISSN 0141-5425 Plamondon A et al 'Evaluation of Euler's angles with a least squares method for the study of lumbar spine motion' * page 148, colonne de gauche, ligne 12 - ligne 15 * | 2 | DOMAINES TECHNIQUES RECHERCHES (Int.Cl.6) G06T |
| A | IEEE TRANSACTIONS ON PATTERN ANALYSIS AND MACHINE INTELLIGENCE, FEB. 1992, USA, VOL. 14, NR. 2, PAGE(S) 239 - 256, ISSN 0162-8828 Besl P J et al 'A method for registration of 3-D shapes' | | |

-/--

Le présent rapport a été établi pour toutes les revendications

| Lieu de la recherche | Date d'achèvement de la recherche | Examinateur |
|---|---|---|
| LA HAYE | 24 Janvier 1995 | Pierfederici, A |

EPO FORM 1503 03.82 (P04C02)

Office européen
des brevets

**RAPPORT DE RECHERCHE EUROPEENNE**

Numero de la demande

EP 94 40 2906

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | REVUE TECHNIQUE THOMSON-CSF, MARCH 1993, FRANCE, VOL. 25, NR. 1, PAGE(S) 107 - 125, ISSN 0035-4279 Henocq H et al 'Reconaissance d'objects 3 D par analyse de Fourier de la silhouette' ----- | | |
| | | | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 24 Janvier 1995 | Pierfederici, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

20